# EUROPEAN PATENT APPLICATION

(11) **EP 2 672 642 A2**
(43) Date of publication of application: **11.12.2013**
(21) Application number: 13163324.0
(22) Date of filing: 11.04.2013
(51) Int. Cl.: H04L 1/00

(54) **Data transfer apparatus and data transfer method for detecting malfunctions in any of the transfer paths**

(30) Priority: 05.06.2012 JP 2012128345
(71) Applicant: FUJITSU LIMITED, Kawasaki-shi, Kanagawa 211-8588 (JP)
(72) Inventor: Nagano, Tomohiro, Kanagawa, 211-8588 (JP); Iwatsuki, Ryuji, Kanagawa, 211-8588 (JP)
(74) Representative: HOFFMANN EITLE

(57) **Abstract**

A data transfer apparatus (30) includes a plurality of transmitting units (37 to 39). The data transfer apparatus (30) includes a detecting unit (41) that detects a malfunction in any of the transfer paths. The data transfer apparatus (30) includes a selecting unit (42) that, when one or more malfunctions have been detected by the detecting unit (41), selects a predetermined number of transmitting units (37 to 39) from among such transmitting units (37 to 39) that transmit data via transfer paths in which no malfunction is detected by the detecting unit (41). The data transfer apparatus (30) includes a generating unit (34) that generates redundancy data used for detecting errors. The data transfer apparatus (30) includes an assigning unit (42) that assigns the data to transmitting units (37 to 39) remaining after excluding one transmitting unit from the transmitting units (37 to 39) selected by the selecting unit (42) and assigns the redundancy data generated by the generating unit (34) to the excluded transmitting unit.

## Description

### FIELD

The embodiments discussed herein are related to a data transfer apparatus and a data transfer method.

### BACKGROUND

Serial transfer techniques for transmitting data having a width of one bit via one or more transfer paths have conventionally been known. As an example of the serial transfer techniques, a data transfer apparatus that transmits and receives data by using Peripheral Component Interconnect Express (PCIe) is known.

To enhance the data transfer capability, such a data transfer apparatus may transmit and receive data by using a multi-link method by which the data is transmitted and received via a plurality of transfer paths (lanes). In the following sections, contents of the data transmitted through the transfer paths when the data is transmitted and received by using the multi-link method will be explained, with reference to the accompanying drawings.

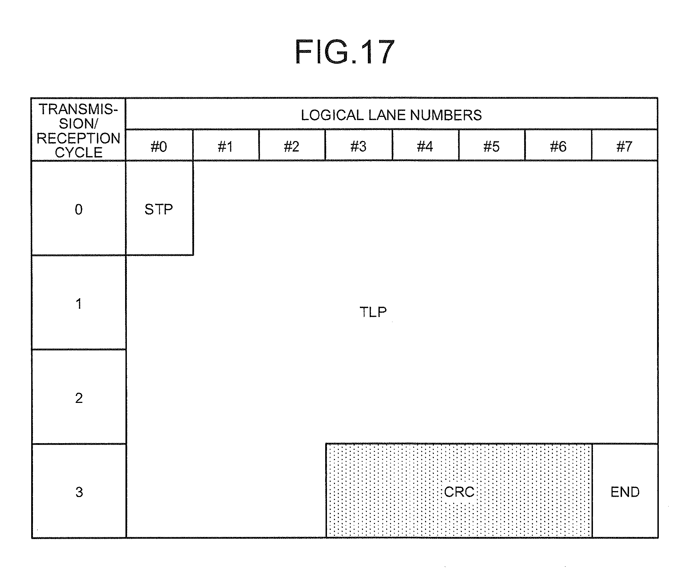

FIG. 17 is a table for explaining an example of data transmitted through lanes. FIG. 17 illustrates a packet format of data transmitted by a data transfer apparatus via eight lanes, namely, lanes #0 to #7. For example, the data transfer apparatus serially assigns 256-bit data including a "Start of TLP (STP)", a "Transaction Layer Packet (TLP)", a "Cyclic Redundancy Check (CRC)", and an "END" to the lanes #0 to #7, starting from the head of the data.

More specifically, the data transfer apparatus calculates the "CRC" from the "TLP" assigned to the lanes #0 to #7. Further, for each transmission/reception cycle, the data transfer apparatus serially assigns the data, one bit at a time, starting from the head of the data including the "STP", the "TLP", the "CRC", and the "END". After that, the data transfer apparatus transmits the assigned data through the lanes #0 to #7.

In this situation, the "STP" denotes data indicating the head of the transmitted/received data. The "TLP" denotes a main body of the transmitted/received data. The "END" denotes data indicating the end of the transmitted/received data. The "CRC" is data used for performing a cyclic redundancy check and is calculated from the TLP. By using the "CRC", it is possible to detect an error up to a length of 32 bits that occurs during the transfer.

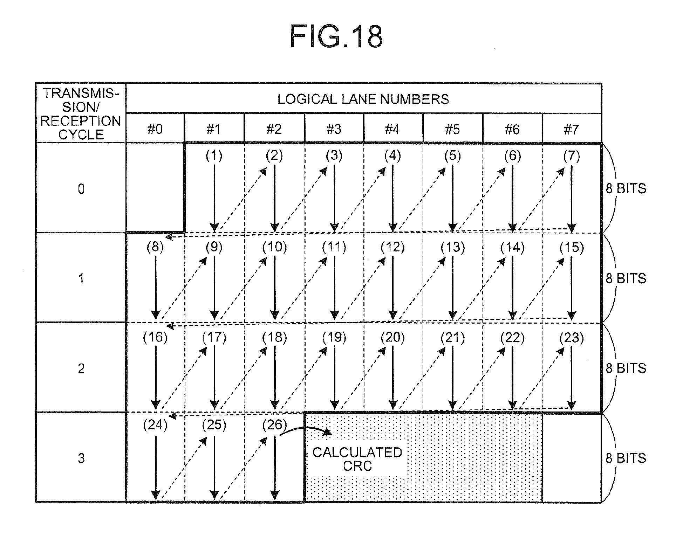

FIG. 18 is a table for explaining an order in which the TLP is assigned to the lanes. For example, the data transfer apparatus assigns the TLP to the lanes #0 to #7 in the order indicated by the arrows in FIG. 18. After that, following the TLP assigned to the lanes #0 to #7 in the order indicated by the arrows in FIG. 18, the 32-bit CRC generated from the TLP is assigned to the four lanes by the data transfer apparatus, eight bits per lane.

In this situation, if a malfunction occurs in any of the transfer paths while transmitting and receiving the data by using the multi-link method, the data transfer apparatus reduces the quantity of transfer paths being used and transmits and receives the data by using the remaining transfer paths experiencing no malfunction. In the following sections, a process performed by the data transfer apparatus to transmit the data through a reduced quantity of transfer paths (hereinafter, "in a degenerate mode") will be explained, with reference to the accompanying drawings.

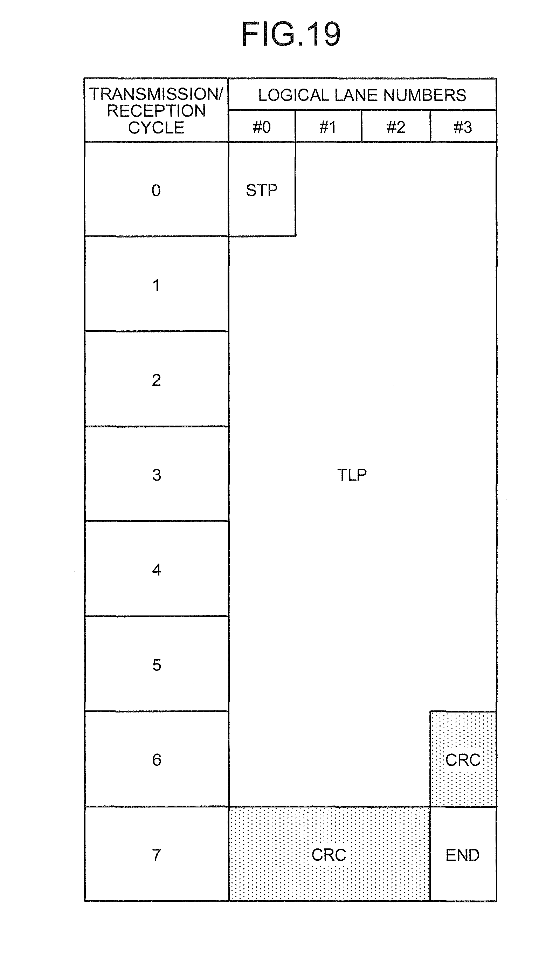

FIG. 19 is a table for explaining an example of the data transmitted through the lanes in the degenerate mode. FIG. 19 illustrates an example in which a malfunction has occurred in one of the lanes #5 to #7, and the transfer paths used for the data transmission/reception are reduced to the lanes #0 to #3. In the example illustrated in FIG. 19, the data transfer apparatus assigns the same data as illustrated in FIG. 17 to the lanes #0 to #3. More specifically, for each transmission/reception cycle, the data transfer apparatus serially assigns 8-bit data to each of the lanes #0 to #3, starting from the head of the data. After that, the data transfer apparatus transmits the data assigned to the lanes #0 to #3.

### Citation List

Patent Document 1: Japanese Laid-open Patent Publication No. 2005-332359

Patent Document 2: Japanese Laid-open Patent Publication No. 2006-186527

Patent Document 3: Japanese Laid-open Patent Publication No. 2007-267392

According to the technique by which the data is serially assigned to the plurality of lanes for each transmission/reception cycle, however, if a transfer error occurs over multiple transmission/reception cycles, the number of bits in the burst error may exceed the number of bits that can be detected by a CRC, and it is impossible to detect the error in some situations.

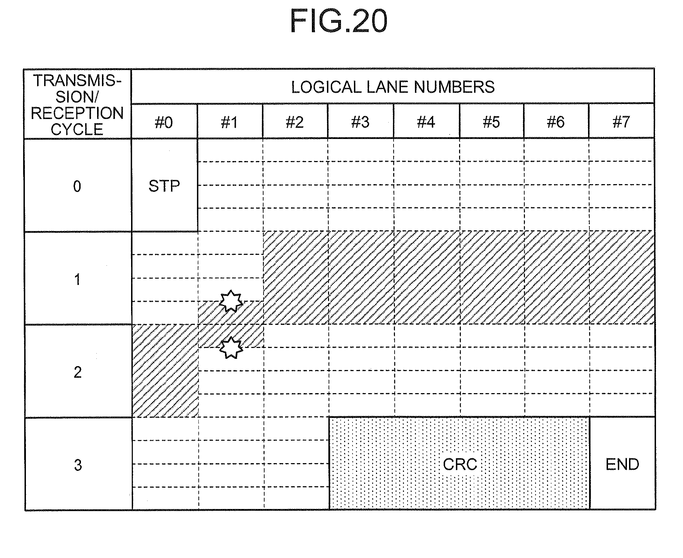

FIG. 20 is a table depicting a detection of an error occurring over multiple cycles. For example, in FIG. 20, of the data transmitted via the lane #1, a 4-bit error occurs in a range extending over transmission/reception cycle 1 and transmission/reception cycle 2. In this situation, the range of the burst error is the range extending from the first bit to the last bit of the occurring error.

In the present example, however, the 8-bit pieces of data are serially assigned to the lanes #0 to #7, starting from the head of the data, for each transmission/reception cycle. For this reason, in the example illustrated in FIG. 20, the range of the burst error is represented by the 60-bit data indicated with hatching in FIG. 20. In this situation, because the bit length of the burst error exceeds the bit length of an error that can be detected by the CRC, the data transfer apparatus on the data reception side is not able to detect the burst error.

Similarly, in the degenerate mode also, the data transfer apparatus assigns 8-bit data to each of the lanes #0 to #3, starting from the head of the data, for each transmission/reception cycle. Consequently, if an error occurs over multiple transmission/reception cycles, the data transfer apparatus on the data reception side does not detect the burst error in some situations, because the number of bits in the burst error exceeds the number of bits in an error that can be detected by the CRC.

Accordingly, it is an object in one aspect of an embodiment of the invention to provide the tolerance for burst errors occurring while the multi-link method is being used.

### SUMMARY

According to an aspect of an embodiment, a data transfer apparatus includes a plurality of transmitting units that transmit data in a same time period via different transfer paths. The data transfer apparatus includes a detecting unit that detects a malfunction in any of the transfer paths. The data transfer apparatus includes a selecting unit that, when no malfunction is detected by the detecting unit, selects all of the transmitting units and that, when one or more malfunctions have been detected by the detecting unit, selects a predetermined number of transmitting units from among such transmitting units that transmit data via transfer paths in which no malfunction is detected by the detecting unit. The data transfer apparatus includes a generating unit that generates redundancy data used for detecting errors, by using data to be transmitted during a predetermined time period by transmitting units remaining after excluding one transmitting unit from the transmitting units selected by the selecting unit. The data transfer apparatus includes an assigning unit that assigns the data to transmitting units remaining after excluding one transmitting unit from the transmitting units selected by the selecting unit and assigns the redundancy data generated by the generating unit to the excluded transmitting unit.

### BRIEF DESCRIPTION OF DRAWINGS

FIG. 1 is a diagram for explaining an example of an information processing system according to a first embodiment;
FIG. 2 is a diagram for explaining a functional configuration of serial interface ports according to the first embodiment;
FIG. 3 contains tables for explaining a lane reversal function;
FIG. 4 is a table for explaining data assigned to transmission lanes by the serial interface port according to the first embodiment;
FIG. 5 is a table for explaining an order in which a CRC is calculated during normal times;
FIG. 6 is a table for explaining data assigned by the serial interface port according to the first embodiment in a degenerate mode;
FIG. 7 is a table for explaining an order in which CRCs to be transmitted in the degenerate mode are calculated;
FIG. 8 is a table for explaining data assigned by a conventional data transfer apparatus in a degenerate mode;
FIG. 9 is a table for explaining an order in which a CRC is calculated by the conventional data transfer apparatus in the degenerate mode;
FIG. 10 is a table for explaining an example of logic used for selecting a link configuration from normal lanes, in the degenerate mode;
FIG. 11 is a diagram for explaining an exemplary circuit used for selecting transmission lanes to be used out of normal transmission lanes, in the degenerate mode;
FIG. 12 is a table for explaining correspondence relationships between pseudo physical lane numbers and data patterns;
FIG. 13 is a table for explaining correspondence relationships between pseudo physical lane numbers and data patterns on a data reception side;
FIG. 14 is a drawing for explaining logic used by a byte striping circuit;
FIG. 15 is a drawing for explaining logic used by a byte unstriping circuit;
FIG. 16 is a flowchart for explaining a flow in a process performed by a link configuring unit;
FIG. 17 is a table for explaining an example of data transmitted through lanes;
FIG. 18 is a table for explaining an order in which a TLP is assigned to the lanes;
FIG. 19 is a table for explaining an example of data transmitted through the lanes in a degenerate mode; and FIG. 20 is a table depicting a detection of an error occurring over multiple cycles.

### DESCRIPTION OF EMBODIMENTS

Preferred embodiments of the present invention will be explained with reference to accompanying drawings.

### [a] First Embodiment

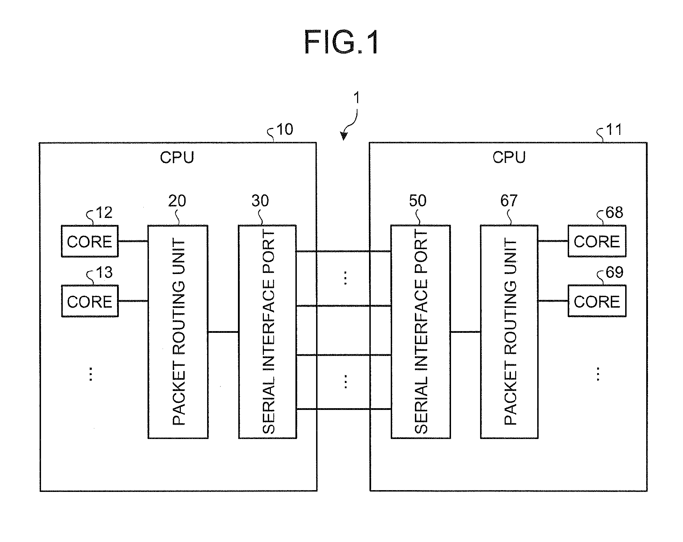

In a first embodiment described below, an example of an information processing system that performs a serial transfer will be explained, with reference to FIG. 1. FIG. 1 is a diagram for explaining the example of the information processing system according to the first embodiment. An information processing system 1 includes at least two Central Processing Units (CPUs) that transmit and receive data by a serial transfer.

As illustrated in FIG. 1, the information processing system 1 includes a CPU 10 and a CPU 11 provided with a plurality of serial transfer paths, i.e., a plurality of lanes. Further, the CPU 10 includes a plurality of cores 12 and 13, a packet routing unit 20, and a serial interface port 30. Similar to the CPU 10, the CPU 11 includes a plurality of cores 68 and 69, a packet routing unit 67, and a serial interface port 50.

The CPU 10 and the CPU 11 are connected to each other by eight lanes that are used when data is transmitted from the CPU 10 to the CPU 11 and eight lanes that are used when data is transmitted from the CPU 11 to the CPU 10. In this situation, each of the lanes is a serial transfer path through which data is transmitted one bit at a time.

Although the example in FIG. 1 illustrates the cores 12 and 13 included in the CPU 10, it is assumed that the CPU 10 further includes two or more cores. Similarly, it is also assumed that the CPU 11 further includes two or more cores, in addition to the cores 68 and 69. The packet routing unit 67 is assumed to achieve the same functions as those of the packet routing unit 20, and the explanation thereof will be omitted.

In the following explanations, each of the cores 13, 68, and 69 is assumed to achieve the same functions as those of the core 12, and the explanation thereof will be omitted. Further, in the following explanations, the time period it takes for each of the lanes to transmit a predetermined number of bits of data will be referred to as "one transmission/reception cycle". The number of bits of data transmitted through each of the lanes in one transmission/reception cycle may be set to an arbitrary value. In the following explanations, however, it is assumed that each of the lanes is configured to transmit 20 bits of data in one transmission/reception cycle.

Further, in the following sections, an example will be explained in which the CPU 10 and the CPU 11 transmit and receive data by using eight lanes both on the transmission side and the reception side; however, the exemplary embodiments are not limited to this example. It is possible to transmit and receive the data by using any arbitrary quantity of lanes. Further, in the following explanations, the eight lanes on the transmission side will be referred to as "transmission lanes #0 to #7", whereas the eight lanes on the reception side will be referred to as "reception lanes #0 to #7".

The core 12 is an arithmetic processing apparatus that performs arithmetic processing, according to a computer program executed by the CPU 10. Further, when transmitting data to the cores 68 and 69 included in the CPU 11, the core 12 outputs the data to be transmitted and a data transmission request to the packet routing unit 20. When having received the data transmission request from the core 12, the packet routing unit 20 outputs the data to be transmitted to the serial interface port 30.

The serial interface port 30 is connected to the serial interface port 50 via the plurality of lanes and is configured to perform a serial transfer of data by using, for example, the technology of PCIe or the like. More specifically, the serial interface port 30 monitors occurrence of malfunctions in the lanes. Further, if a malfunction has been detected in any of the lanes, the serial interface port 30 selects five lanes experiencing no malfunction out of the eight data transmission lanes and transmits data by using the five selected lanes.

In other words, during normal times when no malfunction is detected from any of the lanes, the serial interface port 30 transmits the data via the eight transmission lanes #0 to #7. In contrast, in a degenerate mode where a malfunction has occurred in one or more of the lanes and the quantity of transfer paths is reduced, the serial interface port 30 selects five transmission lanes experiencing no malfunction and transmits the data by using the five selected transmission lanes.

In this situation, during normal times, the serial interface port 30 selects seven transmission lanes out of the eight transmission lanes and assigns the data to be transmitted in one transmission/reception cycle to the seven transmission lanes. Further, the serial interface port 30 generates a CRC used for detecting errors, by using the data assigned to the seven transmission lanes and assigns the generated CRC to the one remaining transmission lane. Further, the serial interface port 30 transmits the data assigned to the seven transmission lanes as well as the CRC generated from the data and assigned to the one transmission lane in one transmission/reception cycle.

In contrast, if one or more errors have been detected in any of the transmission lanes, the serial interface port 30 reduces the quantity of transmission lanes to be used. More specifically, the serial interface port 30 judges whether the quantity of transmission lanes in which the one or more malfunctions have been detected is two or smaller. If the quantity of transmission lanes in which the one or more malfunctions have been detected is two or smaller, the serial interface port 30 selects the five lanes out of the transmission lanes in which no malfunction is detected.

After that, the serial interface port 30 assigns the data to four lanes among the selected transmission lanes, and further assigns a CRC generated by using the data assigned to the four transmission lanes, to the one remaining transmission lane. Further, the serial interface port 30 transmits the data and the CRC.

While in the degenerate mode, the serial interface port 30 transmits the data in two transmission/reception cycles. For example, in the first transmission/reception cycle, the serial interface port 30 assigns pieces of data each having 20 bits to the four transmission lanes, generates a CRC used for detecting errors by using the assigned 80-bit data, and assigns the generated CRC to the one remaining transmission lane. After that, the serial interface port 30 transmits the data and the CRC assigned to the five transmission lanes in the same transmission/reception cycle.

Subsequently, in the second transmission/reception cycle, the serial interface port 30 assigns pieces of data each having 20 bits to three lanes and assigns a piece of 20-bit dummy data (e.g., a reserve "rsv") to one transmission lane. Further, the serial interface port 30 generates a CRC from the data assigned to the three transmission lanes and the dummy data assigned to the one transmission lane and assigns the generated CRC to the one remaining transmission lane. After that, the serial interface port 30 transmits the data, the dummy data, and the CRC assigned to the transmission lanes, in the same transmission/reception cycle.

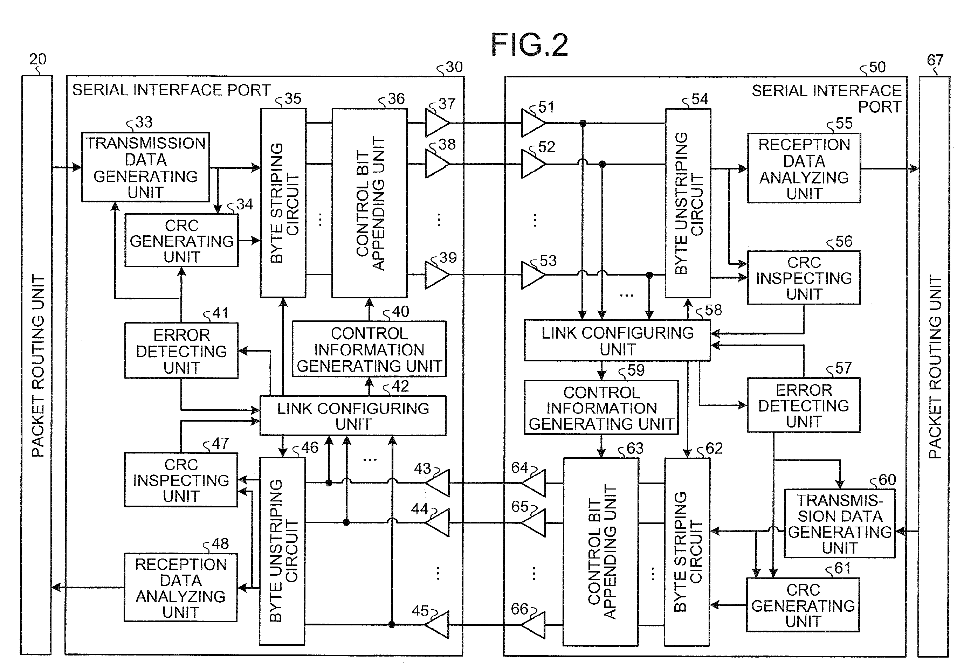

Next, processes performed by the serial interface port 30 will be specifically explained, with reference to FIG. 2. FIG. 2 is a diagram for explaining a functional configuration of the serial interface ports according to the first embodiment.

In the example in FIG. 2, the serial interface port 30 includes a transmission data generating unit 33, a CRC generating unit 34, a byte striping circuit 35, a control bit appending unit 36, a plurality of transmitting units 37, 38, and 39, and a control information generating unit 40. Further, the serial interface port 30 includes an error detecting unit 41, a link configuring unit 42, a plurality of receiving units 43, 44, and 45, a byte unstriping circuit 46, a CRC inspecting unit 47, and a reception data analyzing unit 48.

The serial interface port 50 includes a plurality of receiving units 51, 52, and 53, a byte unstriping circuit 54, a reception data analyzing unit 55, a CRC inspecting unit 56, an error detecting unit 57, and a link configuring unit 58. Further, the serial interface port 50 includes a control information generating unit 59, a transmission data generating unit 60, a CRC generating unit 61, a byte striping circuit 62, a control bit appending unit 63, and a plurality of transmitting units 64, 65, and 66.

In the following explanations, it is assumed that the plurality of receiving units 51, 52, and 53 achieve the same functions as those of the plurality of receiving units 43, 44, and 45 and that the byte unstriping circuit 54 achieves the same functions as those of the byte unstriping circuit 46, and the explanations thereof will be omitted. Further, it is assumed that the reception data analyzing unit 55 achieves the same functions as those of the reception data analyzing unit 48, that the CRC inspecting unit 56 achieves the same functions as those of the CRC inspecting unit 47, and that the error detecting unit 57 achieves the same functions as those of the error detecting unit 41, and the explanations thereof will be omitted.

It is also assumed that the link configuring unit 58 achieves the same functions as those of the link configuring unit 42, that the control information generating unit 59 achieves the same functions as those of the control information generating unit 40, and that the transmission data generating unit 60 achieves the same functions as those of the transmission data generating unit 33, and the explanations thereof will be omitted. In addition, it is also assumed that the CRC generating unit 61 achieves the same functions as those of the CRC generating unit 34 and that the byte striping circuit 62 achieves the same functions as those of the byte striping circuit 35, and the explanations thereof will be omitted.

Furthermore, it is also assumed that the control bit appending unit 63 achieves the same functions as those of the control bit appending unit 36 and that the plurality of transmitting units 64, 65, and 66 achieve the same functions as those of the plurality of transmitting units 37, 38, and 39" and the explanations thereof will be omitted.

Next, the functional units 33 to 48 included in the serial interface port 30 will be explained. The transmission data generating unit 33 generates the data transmitted by the CPU 10 to the CPU 11. More specifically, from the packet routing unit 20, the transmission data generating unit 33 receives the data to be transmitted and divides the received data into sections each having a predetermined bit length.

For example, during normal times, the transmission data generating unit 33 divides the received data into sections each having a 128-bit data length and generates 133-bit data by appending thereto 2-bit data indicating the head of the packet, 2-bit data indicating the tail of the packet, and a 1-bit rsv. After that, the transmission data generating unit 33 outputs the generated 133-bit data to the CRC generating unit 34 and to the byte striping circuit 35.

In contrast, in the degenerate mode, i.e., when having received a notification from the error detecting unit 41 indicating that one or more errors have been detected, the transmission data generating unit 33 performs the following processes: First, the transmission data generating unit 33 divides the received data into sections each having a 128-bit data length and generates 133-bit data by appending thereto 2-bit data indicating the head of the packet, 2-bit data indicating the tail of the packet, and a 1-bit rsv. After that, the transmission data generating unit 33 outputs the generated 133-bit data to the CRC generating unit 34 and to the byte striping circuit 35, in two separate transmission/reception cycles.

More specifically, in the first transmission/reception cycle, the transmission data generating unit 33 outputs 76-bit data out of the 133-bit data to the CRC generating unit 34 and to the byte striping circuit 35. After that, in the subsequent second transmission/reception cycle, the transmission data generating unit 33 generates 76-bit data by appending a 19-bit rsv to the remaining 57 bits and outputs the generated data to the CRC generating unit 34 and to the byte striping circuit 35.

During normal times, the CRC generating unit 34 generates a CRC used for detecting errors, by using the data to be transmitted via seven transmission lanes excluding one transmission lane from the transmission lanes #0 to #7. In contrast, in a degenerate mode, the CRC generating unit 34 generates a CRC used for detecting errors, by using the data to be transmitted via four lanes remaining after excluding one transmission lane from five lanes in which no error was detected.

In this situation, during normal times and in the degenerate mode, the CRC generating unit 34 generates the CRC having the same length as the length of the data transmitted in one transmission/reception cycle through each of the transmission lanes. In other words, during normal times and in the degenerate mode, the CRC generating unit 34 generates the CRC capable of detecting an error having the same length as the length of the data transmitted in one transmission/reception cycle through any one of the transmission lanes. After that, the CRC generating unit 34 outputs the generated CRC to the byte striping circuit 35.

For example, during normal times, the CRC generating unit 34 receives 133-bit data from the transmission data generating unit 33. Accordingly, the CRC generating unit 34 generates a 19-bit CRC by serially using the received data starting from the head thereof. After that, the CRC generating unit 34 outputs the generated 19-bit CRC to the byte striping circuit 35.

In contrast, in the degenerate mode, i.e., when having received a notification from the error detecting unit 41 indicating that one or more errors have been detected, the CRC generating unit 34 generates 19-bit CRCs by using the pieces of 76-bit data output by the transmission data generating unit 33 in two separate transmission/reception cycles. More specifically, the CRC generating unit 34 generates one 19-bit CRC by serially using, starting from the head thereof, the 76-bit data received in the first transmission/reception cycle and outputs the generated CRC to the byte striping circuit 35.

Subsequently, the CRC generating unit 34 generates the other 19-bit CRC by serially using, starting from the head thereof, the 76-bit data received in the second transmission/reception cycle and outputs the generated CRC to the byte striping circuit 35. In other words, in each transmission/reception cycle during normal times and in the degenerate mode, the CRC generating unit 34 generates a CRC capable of detecting a burst error having the same length as the length of the data transmitted through any one of the transmission lanes, by using the data transmitted through each of the transmission lanes #0 to #7 in the one transmission/reception cycle.

As explained later, the serial interface port 30 is configured so that the CRC generated by the CRC generating unit 34 while using the data transmitted in each transmission/reception cycle is transmitted in the same transmission/reception cycle. Thus, even if burst errors keep occurring in the data transmitted through one of the transmission lanes, the serial interface port 50 is able to detect the burst errors by using the CRC transmitted in the same transmission/reception cycle.

The CRC generating unit 34 may generate the CRCs by using an arbitrary calculation formula. For example, the CRC generating unit 34 may perform a calculation while regarding the data as a coefficient for the polynomial G(x)=x¹⁹+x¹⁸+x⁶+x⁵+x³+1 with respect to a variable x and may generate a CRC on the basis of the result of the calculation.

The byte striping circuit 35 assigns the data generated by the transmission data generating unit 33 and the CRC generated by the CRC generating unit 34 to the transmission lanes #0 to #7. More specifically, the byte striping circuit 35 receives a notification about the transmission lanes through which the data is to be transmitted, from the link configuring unit 42.

Accordingly, the byte striping circuit 35 equally assigns the data generated by the transmission data generating unit 33 to the notified transmission lanes. Further, the byte striping circuit 35 receives a notification about the transmission lane through which the CRC is to be transmitted, from the link configuring unit 42. Accordingly, the byte striping circuit 35 assigns the CRC generated by the CRC generating unit 34 to the notified transmission lane.

The byte striping circuit 35 receives a correspondence relationship between logical lane numbers indicating the order in which the data is assigned and physical lane numbers or a correspondence relationship between the logical lane numbers and pseudo physical lane numbers, as well as a notification indicating that a lane reversal is to be applied. Accordingly, the byte striping circuit 35 assigns the data to the transmission lanes identified with the received physical lane numbers or to the transmission lanes identified with the pseudo physical lane numbers, in the order indicated by the notified logical lane numbers.

For example, during normal times, the byte striping circuit 35 receives a notification indicating the transmission lanes #0 to #6 as the lanes through which the data is to be transmitted and a notification indicating the transmission lane #7 as the lane through which a CRC is to be transmitted. Accordingly, the byte striping circuit 35 assigns a 19-bit piece of the data received from the transmission data generating unit 33 to each of the transmission lanes #0 to #6 and assigns the 19-bit CRC received from the CRC generating unit 34 to the transmission lane #7. After that, the byte striping circuit 35 outputs the data and the CRC assigned to the lanes #0 to #7 to the control bit appending unit 36.

In another example, in the degenerate mode, the byte striping circuit 35 receives a notification indicating the transmission lanes #0 to #3 as the lanes through which the data is to be transmitted and a notification indicating the transmission lane #4 as the lane through which a CRC is to be transmitted. Accordingly, the byte striping circuit 35 performs, in each of two transmission/reception cycles, the process of assigning a 19-bit piece from the 76-bit data received from the transmission data generating unit 33 to each of the transmission lanes #0 to #3. Further, the byte striping circuit 35 performs, in each of the two transmission/reception cycles, the process of assigning a 19-bit CRC received from the CRC generating unit 34 to the transmission lane #4.

The control bit appending unit 36 appends a control bit indicating whether each of the pieces of data assigned by the byte striping circuit 35 to the transmission lanes #0 to #7 is data contained in a normal data packet or control data used for controlling the data transfer. After that, the control bit appending unit 36 outputs the pieces of data to each of which the control bit is appended, to the transmitting units 37 to 39.

For example, when transmitting the data received from the byte striping circuit 35, the control bit appending unit 36 appends a control bit indicating that the transmitted data is data contained in a normal data packet, i.e., what is called a D-code. In contrast, when transmitting the control data used for controlling the data transfer, i.e., what is called a K-code, the control bit appending unit 36 receives the control data from the control information generating unit 40. After that, the control bit appending unit 36 appends a control bit indicating that the control data received from the control information generating unit 40 is a K-code.

The control bits appended by the control bit appending unit 36 are not protection targets of the CRCs. Further, the control bit appending unit 36 also appends a control bit to each of the CRCs assigned by the byte striping circuit 35 to some of the transmission lanes.

The plurality of transmitting units 37 to 39 serially transfer the data via the mutually-different transmission lanes #0 to #7. More specifically, the transmitting units 37 to 39 transmit the data and the CRC assigned to the transmission lanes #0 to #7 to the serial interface port 50, via the mutually-different transmission lanes #0 to #7.

In response to a request from the link configuring unit 42, the control information generating unit 40 generates the K-code and outputs the generated K-code to the control bit appending unit 36. For example, when a re-training process is performed to adjust the data transmission/reception timing of the transmitting units 37 to 39, the control information generating unit 40 generates a re-training-purpose K-code and outputs the generated K-code to the control bit appending unit 36.

The error detecting unit 41 detects a malfunction, if any, in any of the transmission lanes #0 to #7. For example, the error detecting unit 41 obtains the data received by the receiving units 43 to 45, via the link configuring unit 42. Further, if the error detecting unit 41 detects, in the obtained data, an error caused in any of the transmission lanes #0 to #7 by the computer program executed by the CPU 10 or the like, the error detecting unit 41 acknowledges the occurrence of the error. After that, the error detecting unit 41 notifies the link configuring unit 42 that the error has been detected and notifies the transmission data generating unit 33 and the CRC generating unit 34 that the error has been detected.

When no error has been detected by the error detecting unit 41, the link configuring unit 42 selects all of the transmission lanes #0 to #7 and notifies the byte striping circuit 35 of the selected transmission lanes #0 to #7. In contrast, when one or more errors have been detected by the error detecting unit 41, the link configuring unit 42 instructs the control information generating unit 40 to perform a re-training process. After that, the link configuring unit 42 identifies one or more malfunctioning lanes being a cause of the one or more errors, by using a result of the re-training process.

Further, the link configuring unit 42 judges whether it is possible to select five transmission lanes out of the transmission lanes in which no error is detected. Further, when having determined that it is possible to select five transmission lanes, the link configuring unit 42 selects five transmission lanes from the transmission lanes in which no error is detected and notifies the byte striping circuit 35 of the selected transmission lanes.

Further, when the link configuring unit 42 has performed the re-training process, the re-training-purpose K-code is transmitted to the serial interface port 50, so that the link configuring unit 58 included in the serial interface port 50 identifies one or more malfunctioning lanes being a cause of the error. After that, the serial interface port 50 notifies the serial interface port 30 of the one or more malfunctioning lanes by using an arbitrary method so that the error detecting unit 41 and the link configuring unit 42 are able to identify the one or more malfunctioning lanes.

Similarly, the link configuring unit 42 identifies one or more malfunctioning lanes on the basis of the re-training-purpose K-code received via the reception lanes #0 to #7 and notifies the error detecting unit 57 and the link configuring unit 58 included in the serial interface port 50 of the one or more identified malfunctioning lanes.

In this situation, when selecting the transmission lanes through which the data is to be transmitted/received in the degenerate mode, the link configuring unit 42 selects the transmission lanes in such a manner that the largest quantity possible of transmission lanes are used in common from among the transmission lanes excluding the one or more malfunctioning lanes, when the lane reversal is taken into consideration. Further, when the lane reversal is to be applied, the link configuring unit 42 notifies the byte striping circuit 35 of the selected transmission lanes and that the lane reversal is to be applied.

The link configuring unit 42 selects the transmission lanes through which the data is to be transmitted/received, on the basis of predetermined logic. For example, the link configuring unit 42 selects the five transmission lanes from the transmission lanes excluding the one or more malfunctioning lanes. Further, if it is not possible to select five transmission lanes because the quantity of malfunctioning lanes is larger than a predetermined value or if a set made up of the malfunctioning transmission lanes satisfies a predetermined condition so as to impair the reliability of the data transmission, or the like, the link configuring unit 42 performs the processes described below.

The link configuring unit 42 instructs the byte striping circuit 35, the control information generating unit 40, and the like that a link-down operation is performed by which the data transmission is suspended. Also, the link configuring unit 42 notifies the computer program executed by the CPU 10 and the like of the occurrence of the link-down state. Examples of situations where the link configuring unit 42 instructs a link-down operation include a situation where malfunctions have been detected from a half of the total quantity of transmission lanes and a situation where malfunctions have been detected from three or more transmission lanes so that it is not possible to select transmission lanes from among the normal transmission lanes on the basis of the predetermined logic. The logic used by the link configuring unit 42 to select the transmission lanes will be explained later.

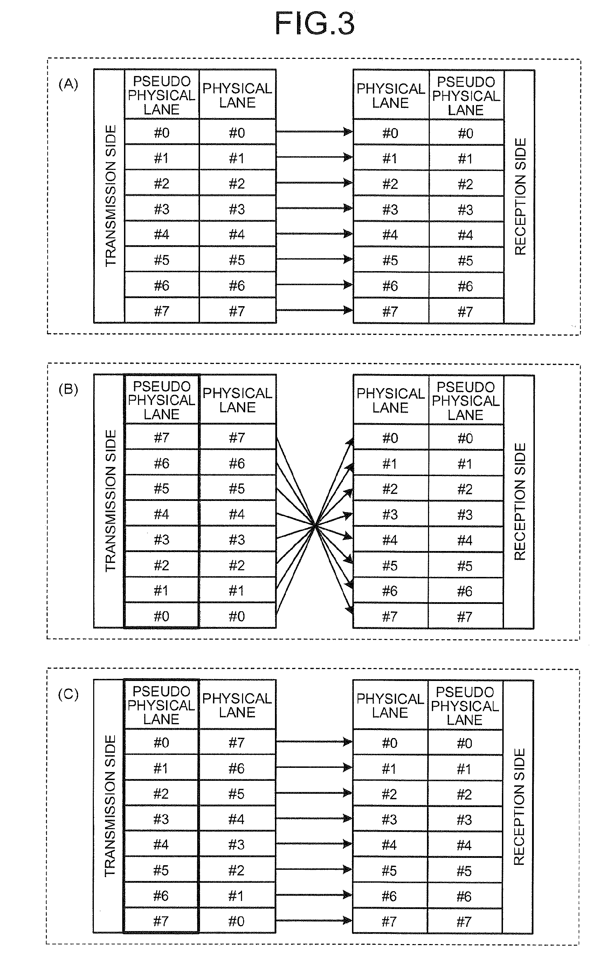

Next, the lane reversal function of the serial interface port 30 will be explained, with reference to FIG. 3. FIG. 3 contains tables for explaining the lane reversal function. The lane reversal is a function to reverse the sequence of the lane numbers, in order to facilitate printed wiring. For example, physical lane numbers are given to the lanes on the transmission side and to the lanes on the reception side. The printed wiring is arranged in such a manner that the lanes having the same physical lane numbers are connected to each other.

If the physical lane numbers on the reception side and the physical lane numbers on the transmission side are arranged in identical sequences as illustrated in FIG. 3(A), the wiring is easy. However, if the physical lane numbers on the transmission side are in a reverse sequence of the physical lane numbers on the reception side as illustrated in FIG. 3(B), the wiring on the transmission side and the reception side can be complicated. To cope with this situation, by setting pseudo physical lanes arranged in a reverse sequence of the physical lanes as illustrated in FIG. 3(C) and assigning the data according to the pseudo physical lanes when the lane reversal is applied, it is possible to simplify the wiring on the transmission side and the reception side.

Further, when selecting the transmission lanes through which the data is to be transmitted/received in the degenerate mode, the link configuring unit 42 selects the transmission lanes in such a manner that the largest quantity possible of transmission lanes are used in common from among the transmission lanes excluding the one or more malfunctioning lanes, when the lane reversal is taken into consideration. Thus, the link configuring unit 42 is able to easily realize the lane reversal function.

Returning to the description of FIG. 2, the plurality of receiving units 43 to 45 are receiving units that receive the data transmitted by the serial interface port 50. The byte unstriping circuit 46 converts the data received by the receiving units 43 to 45 into an original data packet, by using the logic that is the reverse of the logic used by the byte striping circuit 62. After that, the byte unstriping circuit 46 outputs the data packet resulting from the conversion, to the CRC inspecting unit 47 and to the reception data analyzing unit 48.

The CRC inspecting unit 47 detects one or more errors by using the CRCs included in the data packet converted by the byte unstriping circuit 46. Further, if one or more errors have been detected, the CRC inspecting unit 47 notifies the link configuring unit 42 of the occurrence of the one or more errors. When having received the data packet from the byte unstriping circuit 46, the reception data analyzing unit 48 analyzes the received data and outputs an analysis result to the packet routing unit 20.

For example, the CPU 10, the CPU 11, the core 12, the core 13, the packet routing unit 20, the serial interface port 30, the serial interface port 50, the packet routing unit 67, the core 68, and the core 69 are configured as an electronic circuit. Similarly, the transmission data generating unit 33, the CRC generating unit 34, the byte striping circuit 35, the control bit appending unit 36, the transmitting units 37 to 39, the control information generating unit 40, and the error detecting unit 41 are configured as an electronic circuit.

Further, the link configuring unit 42, the receiving units 43 to 45, the byte unstriping circuit 46, the CRC inspecting unit 47, and the reception data analyzing unit 48 are configured as an electronic circuit. Similarly, the functional units 51 to 66 included in the serial interface port 50 are configured as electronic circuits, like those configured with the functional units 33 to 48 included in the serial interface port 30. In this situation, examples of applicable electronic circuits include integrated circuits such as Application Specific Integrated Circuits (ASICs) and Field Programmable Gate Arrays (FPGAs) as well as CPUs and Micro Processing Units (MPUs).

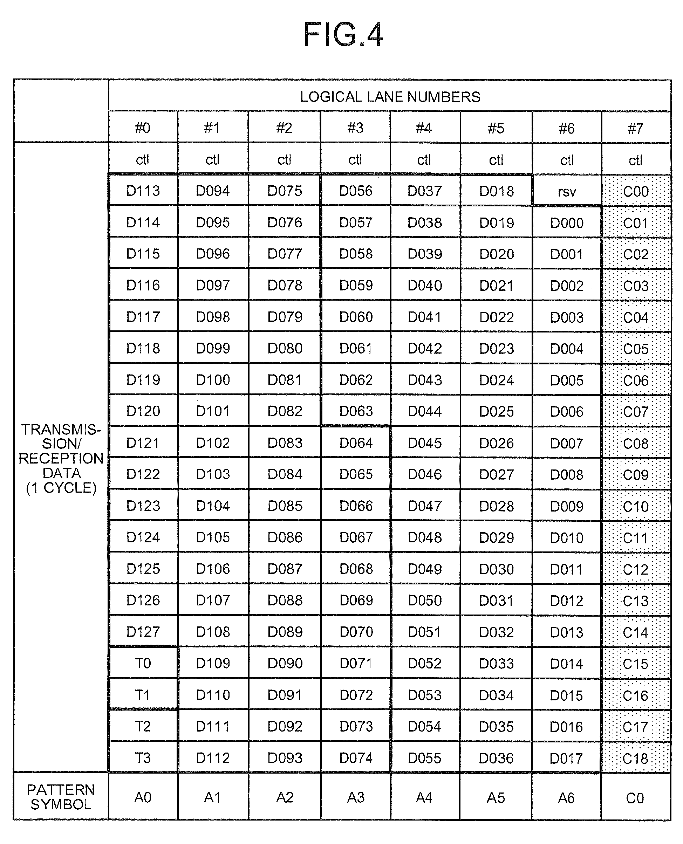

Next, the data assigned to the transmission lanes by the serial interface port 30 will be explained, with reference to FIGS. 4 to 9. First, the data assigned to the transmission lanes by the serial interface port 30 during normal times will be explained, with reference to FIG. 4. FIG. 4 is a table for explaining the data assigned to the transmission lanes by the serial interface port according to the first embodiment.

FIG. 4 indicates the transmission/reception data assigned to the transmission lanes corresponding to the logical lane numbers for each transmission/reception cycle, as well as pattern symbols indicating data patterns.
Further, D000 to D127 in FIG. 4 represent the main body of the data to be transmitted, whereas T0 and T1 represent the data indicating the head, the body or the tail of D000 to D063 in the packet, while T2 and T3 represent the data indicating the head, the body or the tail of D064 to D127 in the packet. Further, ctl's in FIG. 4 are the control bits, whereas C00 to C18 represent a 19-bit CRC.

For example, as illustrated in FIG. 4, the serial interface port 30 assigns data having a pattern symbol A0, i.e., 20-bit data including a ctl, D113 to D127, and T0 to T3, to the transmission lane identified with logical lane number #0. Further, the serial interface port 30 assigns data having a pattern symbol A1, i.e., 20-bit data including a ctl and D094 to D112 to the transmission lane identified with logical lane number #1.

Also, as illustrated in FIG. 4, the serial interface port 30 assigns data having pattern symbols A2 to A6 to the transmission lanes identified with logical lane number #2 to #6. In addition, the serial interface port 30 assigns data having a pattern symbol C0, i.e., 20-bit data including a ctl and C00 to C18 to the transmission lane identified with logical lane number #7.

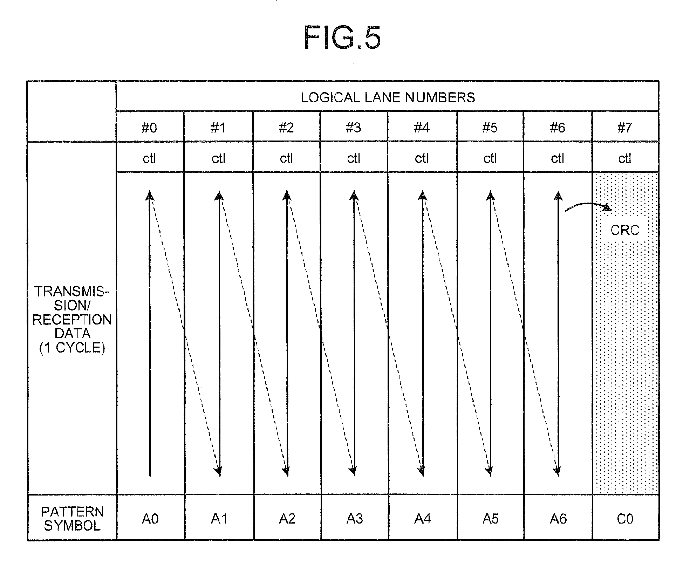

Next, a data calculation order in which a CRC is calculated by the serial interface port 30 during normal times will be explained, with reference to FIG. 5. FIG. 5 is a table for explaining the order in which a CRC is calculated during normal times. As indicated by the arrows in FIG. 5, the serial interface port 30 performs a calculation on the data assigned to the logical lanes #0 to #6 in a transmission/reception cycle, in ascending order of the logical lane numbers. After that, the serial interface port 30 assigns the CRC, which is the result of the calculation, to the logical lane #7, as the CRC to be transmitted in the same transmission/reception cycle as the cycle in which the data from which the CRC was calculated is transmitted.

With this arrangement, the serial interface port 50 is able to detect one or more errors occurring in the one transmission/reception cycle by using the CRC transmitted in the same transmission/reception cycle. Consequently, even if all of the pieces of data transmitted through one of the transmission lanes in the one transmission/reception cycle have a bit-flip error, the serial interface port 50 is able to detect the errors by using the CRC transmitted in the same transmission/reception cycle. Thus, the serial interface port 30 is able to improve the burst error tolerance.

The serial interface port 30 is configured to perform calculations while taking the rsv's assigned to the logical lanes #0 to #6 into consideration. Thus, by performing the calculations while taking the rsv's into consideration, the serial interface port 30 is able to maintain extensibility of the logic used in the performed processes.

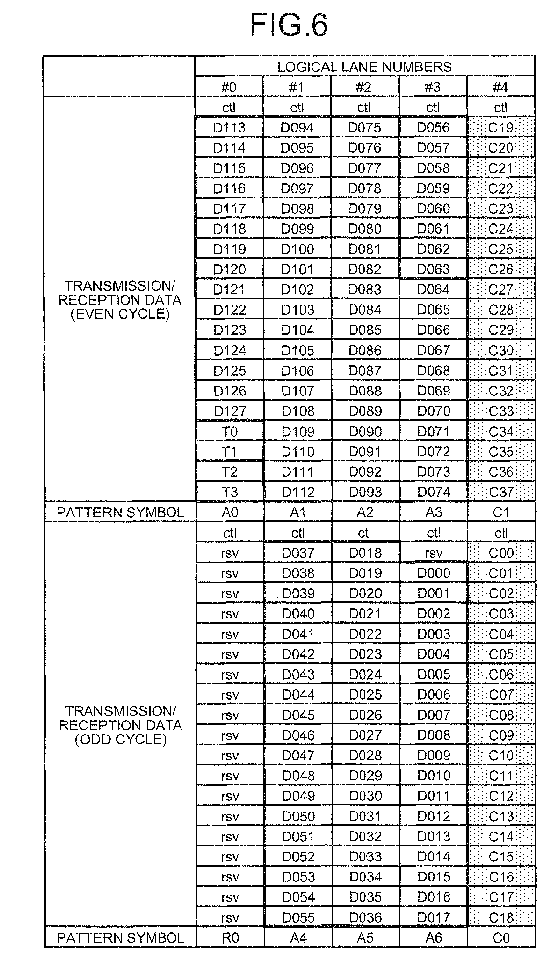

Next, the data assigned by the serial interface port 30 in the degenerate mode will be explained, with reference to FIGS. 6 to 8. FIG. 6 is a table for explaining the data assigned by the serial interface port according to the first embodiment in the degenerate mode. Similar to FIG. 4, FIG. 6 indicates the data assigned to five logical lanes by the serial interface port 30 in the degenerate mode, as well as pattern symbols indicating data patterns.

FIG. 6 illustrates 200-bit data transmitted by the serial interface port 30 in two transmission/reception cycles in the degenerate mode. In the following explanations, the first transmission/reception cycle in which the data is transmitted by the serial interface port 30 in the degenerate mode will be referred to as an "even cycle", whereas the second transmission/reception cycle will be referred to as an "odd cycle". The serial interface port 30 determines whether the current transmission/reception cycle is an even cycle or an odd cycle, by negotiating with the serial interface port 50 during the re-training process.

As illustrated in FIG. 6, in the even cycle, the serial interface port 30 assigns pieces of data having the pattern symbols A0 to A3 to the transmission lanes identified with logical lane numbers #0 to #3. Also, the serial interface port 30 assigns a 19-bit CRC having a pattern symbol C1 to the transmission lane identified with logical lane number #4.

In contrast, as illustrated in FIG. 6, in the odd cycle, the serial interface port 30 assigns data having a pattern symbol R0, i.e., data including a ctl and 19 bits of rsv's, to the transmission lane identified with logical lane number #0. Further, the serial interface port 30 assigns pieces of data having the pattern symbols A4 to A6 to the transmission lanes identified with logical lane numbers #1 to #3. Also, the serial interface port 30 assigns a 19-bit CRC having a pattern symbol C0 to the transmission lane identified with logical lane number #4.

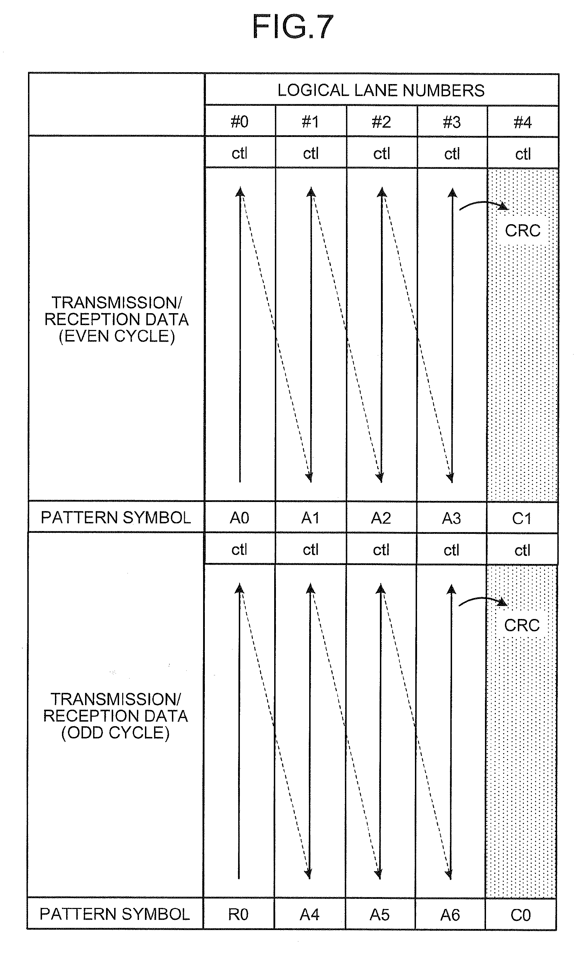

FIG. 7 is a table for explaining an order in which CRCs to be transmitted in the degenerate mode are calculated. As indicated by the arrows in FIG. 7, in each of the even and the odd cycles, the serial interface port 30 calculates a CRC from the pieces of data transmitted through the transmission lanes identified with logical lane numbers #0 to #3.

After that, the serial interface port 30 arranges the data transmission so that the data calculated from the pieces of data transmitted in the even cycle is transmitted in the same even cycle, through the transmission lane identified with logical lane number #4. Also, the serial interface port 30 arranges the data transmission so that the data calculated from the pieces of data transmitted in the odd cycle is transmitted in the same odd cycle, through the transmission lane identified with logical lane number #4.

Consequently, in the degenerate mode also, even if all of the pieces of data received through one of the transmission lanes have a bit-flip error, the serial interface port 50 is able to detect the errors by using the CRC received in the same transmission/reception cycle. Thus, the serial interface port 30 is able to improve the burst error tolerance.

Further, in the degenerate mode, the serial interface port 30 transmits the data via half as many transmission lanes as during normal times and transmits the CRC via another transmission lane. In contrast, during normal times, the serial interface port 30 transmits the CRC via one of the transmission lanes and transmits the data via the rest of the transmission lanes. Consequently, the serial interface port 30 is able to improve the burst error tolerance, without reducing the bandwidth used for the data transmissions.

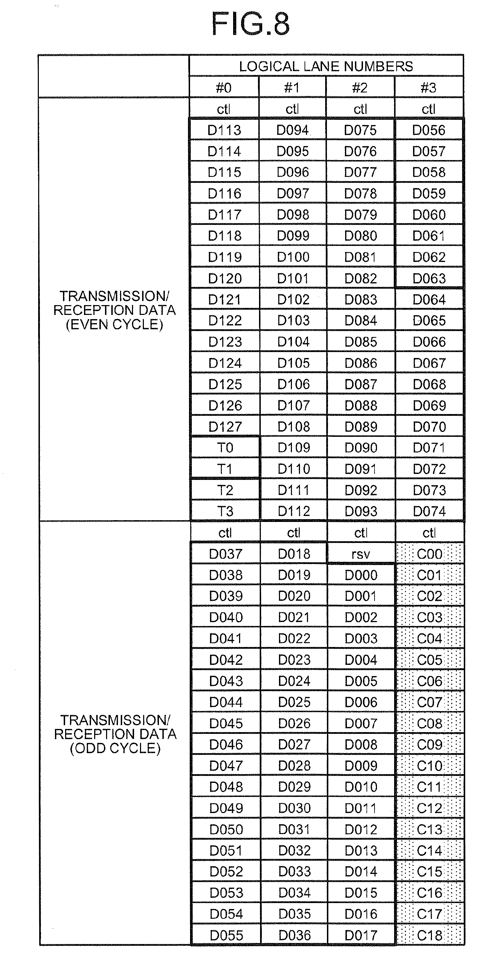

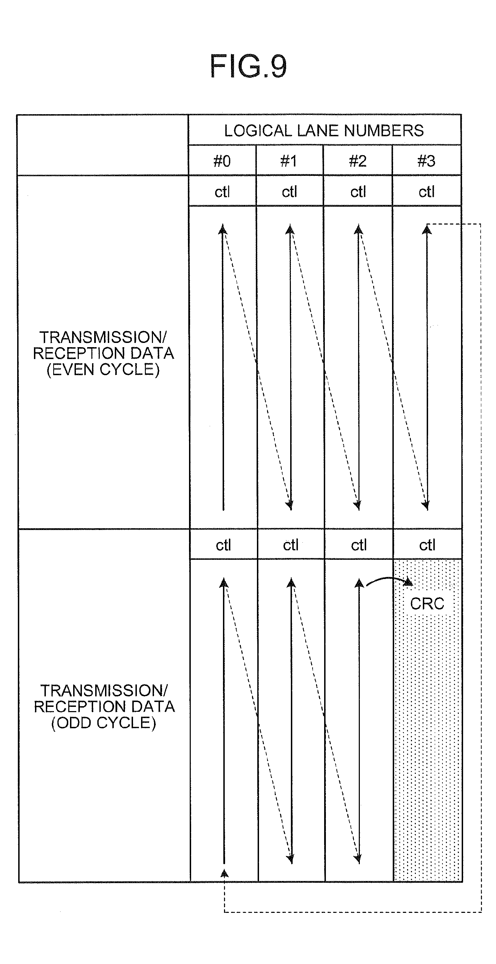

Next, data transmitted by a conventional data transfer apparatus in a degenerate mode will be explained, with reference to FIGS. 8 and 9. FIG. 8 is a table for explaining the data assigned by the conventional data transfer apparatus in the degenerate mode. FIG. 9 is a table for explaining an order in which a CRC is calculated by the conventional data transfer apparatus in the degenerate mode.

For example, as indicated in FIG. 8, in the degenerate mode, the conventional data transfer apparatus assigns a half of the normal-time data to the transmission lanes identified with logical lane numbers #0 to #3 in each of the even and the odd cycles. Further, as indicated by the arrows in FIG. 9, the conventional data transfer apparatus calculates a CRC from both the pieces of data transmitted in the even cycle and the pieces of data transmitted in the odd cycle. Consequently, if an error occurs over multiple transmission/reception cycles in any of the transmission lanes, the conventional data transfer apparatus is not able to detect the burst error.

In contrast, both during normal times and in the degenerate mode, for each transmission/reception cycle, the serial interface port 30 generates a CRC from the data to be transmitted and transmits the generated CRC and the data in mutually the same transmission/reception cycle. Consequently, the serial interface port 30 is able to improve the burst error tolerance.

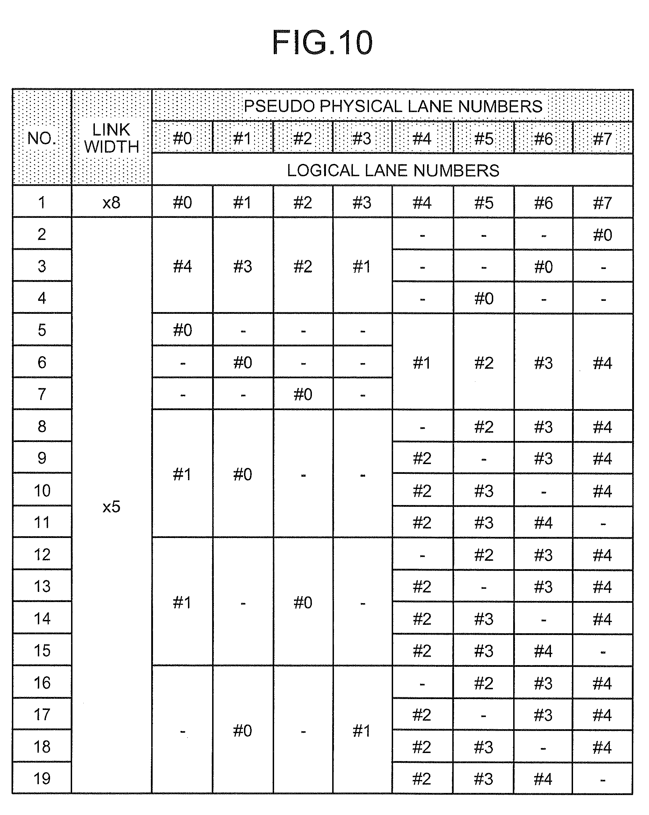

Next, a specific example of the process performed by the link configuring unit 42 to select the transmission lanes will be explained, with reference to FIGS. 10 to 13. First, an example of the logic used by the link configuring unit 42 to select the transmission lanes in the degenerate mode will be explained, with reference to FIG. 10. FIG. 10 is a table for explaining the example of the logic used for selecting a link configuration from normal lanes, in the degenerate mode.

FIG. 10 illustrates pseudo physical lane numbers of the transmission lanes selected by the link configuring unit 42 during normal times and in the degenerate mode, as well as which ones of the logical lane numbers indicated in FIGS. 3 to 8 correspond to the selected transmission lanes. In other words, the example illustrated in FIG. 10 indicates correspondence relationships between the pseudo physical lane numbers and the logical lane numbers that can be used when the lane reversal is applied.

For example, when the link width is "x8", i.e., during normal times when the eight transmission lanes are used, the link configuring unit 42 notifies the byte striping circuit 35 of a correspondence relationship identified as No. 1 in FIG. 10. More specifically, the link configuring unit 42 notifies the byte striping circuit 35 of the correspondence relationship in which pseudo physical lane numbers #0 to #7 correspond to the logical lanes #0 to #7.

In another example, when the link width is "x5", i.e., in the degenerate mode when five transmission lanes are used, the link configuring unit 42 selects one of the correspondence relationships identified as Nos. 2 to 19 in FIG. 10, in accordance with the pseudo physical lane numbers of the malfunctioning transmission lanes. After that, the link configuring unit 42 notifies the byte striping circuit 35 of the selected correspondence relationship.

For example, if none of the pseudo physical lanes #0 to #3 is malfunctioning, while one of the pseudo physical lanes #5 to #7 is malfunctioning, the link configuring unit 42 notifies the byte striping circuit 35 of one of the correspondence relationships identified as Nos. 2 to 4 in FIG. 10. For example, when having selected the correspondence relationship identified as No. 2, the link configuring unit 42 notifies the byte striping circuit 35 of the correspondence relationship in which the transmission lanes identified with pseudo physical lane numbers #0 to #3 correspond to the logical lanes #4 to #1, whereas the transmission lane identified with pseudo physical lane number #7 corresponds to the logical lane #0.

In another example, if one of the transmission lanes identified with pseudo physical lane numbers #0 to #3 is malfunctioning, while none of the pseudo physical lanes #5 to #7 is malfunctioning, the link configuring unit 42 notifies the byte striping circuit 35 of one of the correspondence relationships identified as Nos. 5 to 7 in FIG. 10. In addition, if a malfunction further occurs in another one of the transmission lanes, the link configuring unit 42 judges whether it is possible to continue using at least one of the correspondence relationships identified as Nos. 2 to 7. If it is possible to continue using at least one of the correspondence relationships identified as Nos. 2 to 7, the link configuring unit 42 notifies the byte striping circuit 35 of the correspondence relationship that can continue to be used.

Further, if it is not possible to continue using any of the correspondence relationships identified as Nos. 2 to 7, the link configuring unit 42 performs the following processes: First, the link configuring unit 42 judges whether any of the transmission lanes identified with pseudo physical lane numbers #0 to #3 is malfunctioning. If none of the transmission lanes contained in at least one of the sets made up of pseudo physical lane numbers [#0, #1], [#0, #2], and [#1, #3] is malfunctioning, the link configuring unit 42 further judges whether any of the transmission lanes identified with pseudo physical lane numbers #5 to #7 is malfunctioning.

If none of the transmission lanes contained in at least one of the sets made up of pseudo physical lane numbers [#5, #6, #7], [#4, #6, #7], [#4, #5, #7], and [#4, #5, #6] is malfunctioning, the link configuring unit 42 performs the following processes: The link configuring unit 42 selects one of the correspondence relationships identified with Nos. 8 to 19, in accordance with the pseudo physical lane numbers of the transmission lanes that are not malfunctioning and notifies the byte striping circuit 35 of the selected correspondence relationship.

The correspondence relationships illustrated in FIG. 10 are configured so that, while the application of the lane reversal is taken into consideration, such logic is used that causes the largest quantity possible of correspondence relationships to be used in common between the situation where the lane reversal is not applied and the situation where the lane reversal is applied. As described above, because the link configuring unit 42 notifies the byte striping circuit 35 of the correspondence relationships based on the logic illustrated in FIG. 10, the link configuring unit 42 is able to continue to transmit the data while using five transmission lanes as long as the quantity of malfunctioning lanes is two or smaller. It is therefore possible to reduce the circuit scale of the byte striping circuit 35.

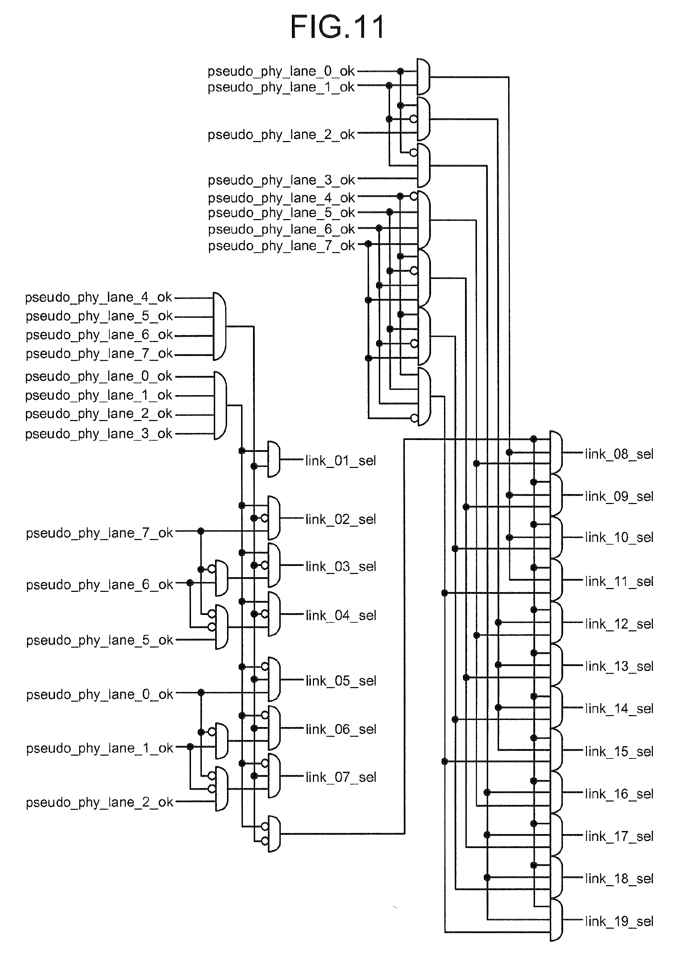

Next, an exemplary circuit included in the link configuring unit 42 will be explained, with reference to FIG. 11. FIG. 11 is a diagram for explaining the exemplary circuit used for selecting the transmission lanes to be used, out of the normal transmission lanes, in the degenerate mode. FIG. 11 illustrates the exemplary circuit included in the link configuring unit 42 that realizes the process of selecting the transmission lanes in FIG. 10, in accordance with the pseudo physical lane numbers of the transmission lanes that are not malfunctioning.

In FIG. 11, "pseudo_phy_lane_N_ok" denotes a signal indicating that the lane identified with pseudo physical lane number "N" is not malfunctioning. In FIG. 11, "link_M_sel" is an enabling signal to select the correspondence relationship identified as No. "M", out of the correspondence relationships identified as Nos. 1 to 19 in FIG. 10. For example, the circuit illustrated in FIG. 11 is configured so that, when "pseudo_phy_lane_0_ok" to "pseudo_phy_lane_7_ok" are "High", "link_01_sel" is also "High". Accordingly, the link configuring unit 42 selects the correspondence relationship identified as No. 1 in FIG. 10.

Further, for example, the circuit illustrated in FIG. 11 is configured so that, when "pseudo_phy_lane_7_ok" is "Low", "link_03_sel" is "High". Accordingly, the link configuring unit 42 selects the correspondence relationship identified as No. 3 in FIG. 10. As explained here, the link configuring unit 42 is able to select the transmission lanes to be used in the data transmission, by using the simple combinations of AND gates, as illustrated in FIG. 11.

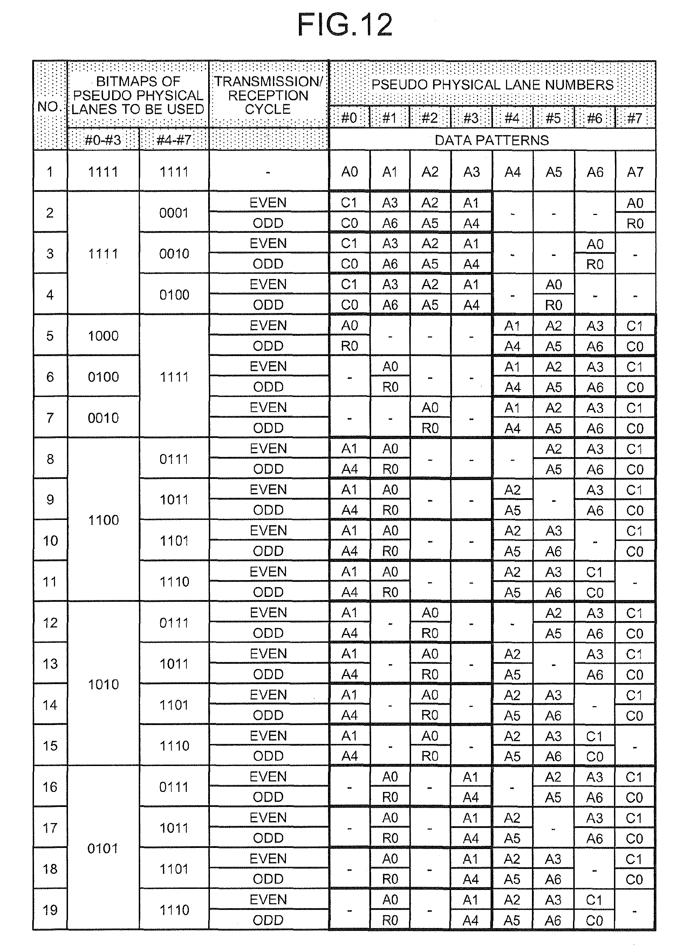

Next, correspondence relationships between the pseudo physical lane numbers and patterns of the data to be transmitted will be explained, with reference to FIG. 12. FIG. 12 is a table for explaining the correspondence relationships between the pseudo physical lane numbers and the data patterns. FIG. 12 illustrates numbers indicating the correspondence relationships between the pseudo physical lane numbers and the logical lane numbers, bitmaps indicating the pseudo physical lanes to be used, transmission/reception cycles, and correspondence relationships between the pseudo physical lane numbers and the data patterns.

Each of the bitmaps indicating pseudo physical lanes is represented by 4-bit information indicating the pseudo physical lanes that are used with respect to a set made up of the pseudo physical lanes #0 to #3 and a set made up of the pseudo physical lanes #4 to #7, while each pseudo physical lane that is to be used is expressed as "1", whereas each pseudo physical lane that is not to be used is expressed as "0". For example, if a bitmap indicates "1010" with respect to the set made up of the pseudo physical lanes #0 to #3, it means that the pseudo physical lane #0 and the pseudo physical lane #2 are to be used, whereas the pseudo physical lane #1 and the pseudo physical lane #3 are not to be used.

The contents of FIG. 12 summarize FIGS. 4, 6, 10, and 11. For example, if the bitmap of the set made up of the pseudo physical lanes #0 to #3 is "1100", whereas the bitmap of the set made up of the pseudo physical lanes #4 to #7 is "1011", the correspondence relationship identified as No. "9" is selected. Accordingly, the serial interface port 30 transmits the data having the pattern symbols A1 and A4 via the pseudo physical lane #0 and transmits the data having the pattern symbols A0 and R0 via the pseudo physical lane #1.

Further, the serial interface port 30 transmits the data having the pattern symbols A2 and A5 via the pseudo physical lane #4 and transmits the data having the pattern symbols A3 and A6 via the pseudo physical lane #6. Furthermore, the serial interface port 30 transmits the data having the pattern symbols C1 and C0, i.e., CRCs, via the pseudo physical lane #7.

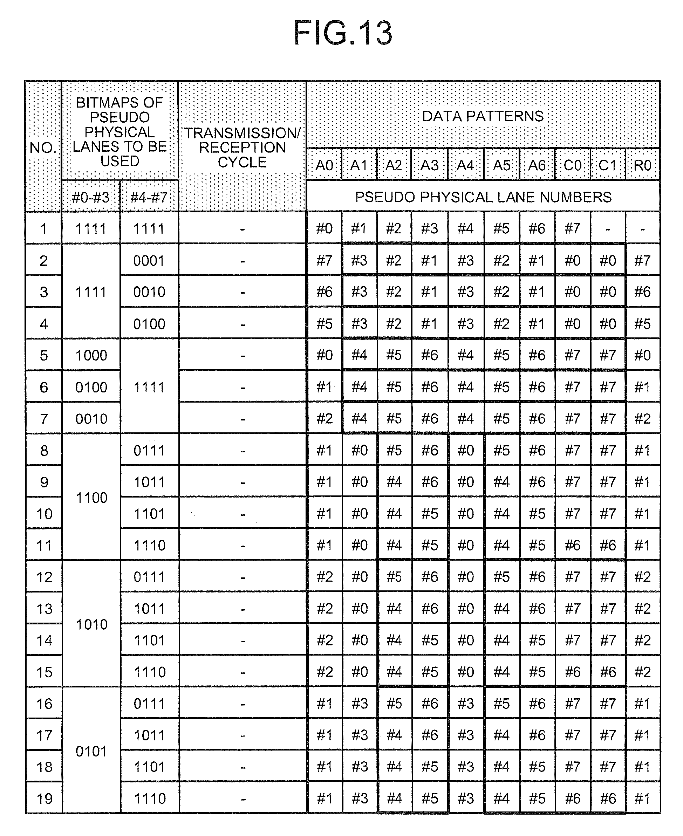

Next, correspondence relationships between the pseudo physical lane numbers and data patterns that are used when the data reception side, i.e., the serial interface port 50 receives the data will be explained, with reference to FIG. 13. FIG. 13 is a table for explaining the correspondence relationships between the pseudo physical lane numbers and the data patterns on the data reception side. Similar to FIG. 12, FIG. 13 illustrates numbers indicating the correspondence relationships between the pseudo physical lanes and the logical lanes, bitmaps indicating the pseudo physical lanes to be used, transmission/reception cycles, and correspondence relationships between the data patterns and the pseudo physical lane numbers.

For example, if the bitmap of the set made up of the pseudo physical lanes #0 to #3 is "1100", whereas the bitmap of the set made up of the pseudo physical lanes #4 to #7 is "1011", the serial interface port 50 selects the correspondence relationship identified as No. "9". Accordingly, the serial interface port 50 receives the data having the pattern symbols A1 and A4 via the pseudo physical lane #0 and receives the data having the pattern symbols A0 and R0 via the pseudo physical lane #1.

Further, the serial interface port 50 receives the data having the pattern symbols A2 and A5 via the pseudo physical lane #4 and receives the data having the pattern symbols A3 and A6 via the pseudo physical lane #6. Furthermore, the serial interface port 50 receives the data having the pattern symbols C1 and C0, i.e., the CRCs, via the pseudo physical lane #7.

By performing an unstriping process according to the correspondence relationship indicated in FIG. 13, the serial interface port 50 is able to put the data transmitted by the serial interface port 30 back into the original data format. Similarly, by controlling the byte unstriping circuit 46 according to the correspondence relationship indicated in FIG. 13, the serial interface port 30 is also able to put the data transmitted by the serial interface port 50 back into the original data format.

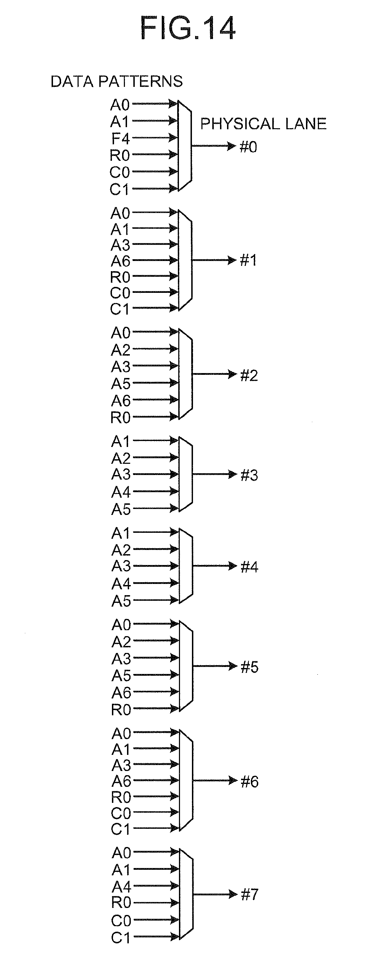

Next, an example of operation logic used by the byte striping circuit 35 will be explained, with reference to FIG. 14. FIG. 14 is a drawing for explaining the logic used by the byte striping circuit. FIG. 14 illustrates which data pattern is assigned to which physical lane.

For example, as indicated in FIG. 14, the byte striping circuit 35 includes selectors that select the data to be assigned to the physical lanes #0 to #7. Further, the byte striping circuit 35 inputs, to the selectors, the pseudo physical lane numbers selected on the basis of the logic indicated in FIG. 10, information indicating whether the current transmission cycle is an even cycle or an odd cycle, and information indicating whether the lane reversal is applied or not. Accordingly, the selectors output data patterns to the physical lanes #0 to #7, on the basis of the logic illustrated in FIG. 10.

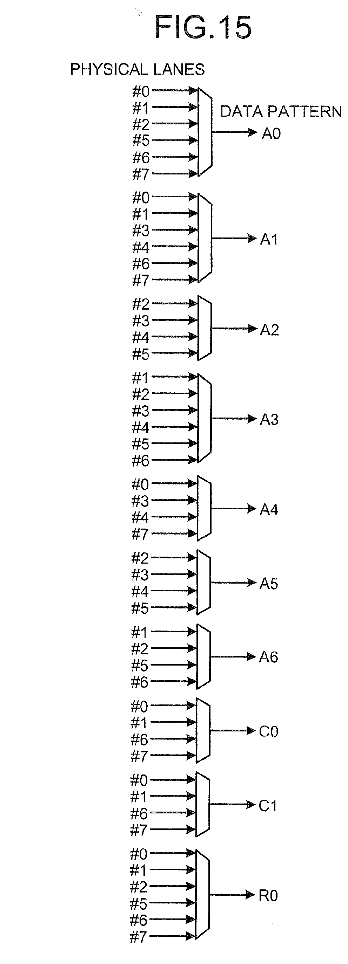

Next, an example of the operation logic used by the byte unstriping circuit 46 will be explained with reference to FIG. 15. FIG. 15 is a drawing for explaining the logic used by the byte unstriping circuit. FIG. 15 illustrates what data pattern is assumed for data received from which physical lanes.

For example, as illustrated in FIG. 15, the byte unstriping circuit 46 includes selectors that select the data received through the physical lanes #0 to #7. Further, the byte unstriping circuit 46 inputs, to the selectors, the pseudo physical lane numbers selected on the basis of the logic indicated in FIG. 10, information indicating whether the current transmission cycle is an even cycle or an odd cycle, and information indicating whether the lane reversal is applied or not.

Accordingly, the selectors assume the data received through the lanes selected out of the physical lanes #0 to #7 to be the pieces of data having the pattern symbols A0 to A6, C0, C1, and R0, on the basis of the logic indicated in FIG. 10. As a result, the byte unstriping circuit 46 is able to restore the data transmitted on the basis of the logic indicated in FIG. 10 into the original data format.

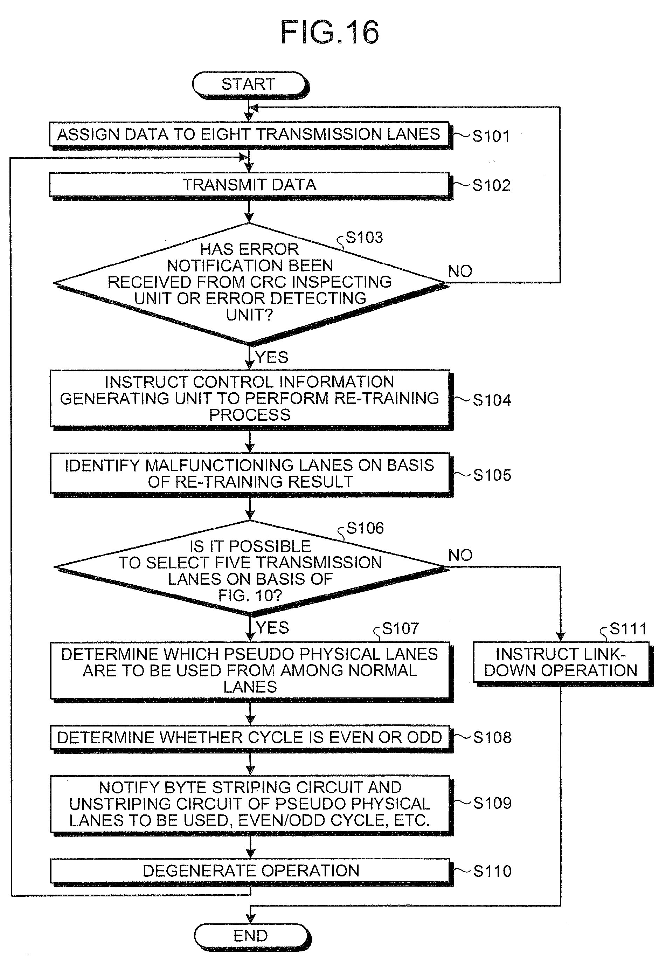

Next, a flow in a process performed by the link configuring unit 42 will be explained, with reference to FIG. 16. FIG. 16 is a flowchart for explaining the flow in the process performed by the link configuring unit. For example, the link configuring unit 42 determines that no malfunction has occurred in the transmission lanes #0 to #7 and instructs the byte striping circuit 35 to assign data to the eight links (step S101) and causes the data to be transmitted (step S102).

Subsequently, the link configuring unit 42 judges whether an error notification has been received from the CRC inspecting unit 47 or the error detecting unit 41 (step S103). If no error notification has been received (step S103: No), the link configuring unit 42 performs the process at step S101 again. On the contrary, if an error notification has been received (step S103: Yes), the link configuring unit 42 instructs the control information generating unit 40 to perform a re-training process (step S104). After that, the link configuring unit 42 identifies one or more malfunctioning lanes on the basis of a result of the re-training process (step S105).

Subsequently, on the basis of FIG. 10, the link configuring unit 42 judges whether it is possible to select five transmission lanes (step S106). If determined that it is possible (step S106: Yes), the link configuring unit 42 determines which pseudo physical lanes are to be used from among the normal lanes (step S107). Further, the link configuring unit 42 instructs the control information generating unit 40 to negotiate with the serial interface port 50 and determines whether the current transmission/reception cycle is an even cycle or an odd cycle (step S108).

After that, the link configuring unit 42 notifies the byte striping circuit 35 and the byte unstriping circuit 46 of the correspondence relationship between the pseudo physical lanes and the logical lanes to be used, the current transmission/reception cycle, and the like (step S109). After that, the link configuring unit 42 starts a degenerate operation to transmit the data via the five transmission lanes (step S110), and causes the data to be transmitted (step S102).

On the contrary, if it is not possible to select five transmission lanes on the basis of FIG. 10 (step S106: No), the link configuring unit 42 instructs a link-down operation (step S111), and the process is ended.

Advantageous effects of the first embodiment

As explained above, the serial interface port 30 transmits the data to the serial interface port 50 via the plurality of transmission lanes. In this situation, the serial interface port 30 has the function of detecting a malfunction, if any, in any of the transmission lanes. If no malfunction is detected, the serial interface port 30 selects all of the transmission lanes. On the contrary, if one or more malfunctions have been detected, the serial interface port 30 selects five transmission lanes experiencing no malfunction.

After that, the serial interface port 30 assigns the data to the transmission lanes remaining after excluding one from the selected transmission lanes. Further, the serial interface port 30 generates the CRC used for detecting errors by using the assigned data and assigns the generated CRC to the one excluded transmission lane.

With this arrangement, even if malfunctions keep occurring in one of the transmission lanes so that an error occurs over multiple transmission/reception cycles, the serial interface port 30 is able to detect the burst error by using the CRCs transmitted in the transmission/reception cycles. As a result, the serial interface port 30 is able to improve the burst error tolerance.

Further, the serial interface port 30 generates the CRCs each capable of detecting a burst error having the same length as that of the data assigned to each of the transmission lanes and transmits each generated CRC in the same transmission/reception cycle as the cycle in which the data from which the CRC was calculated is transmitted. With this arrangement, even if all the bits in one of the transmission lanes have an error, the serial interface port 30 is able to detect the burst error, because the bit length of the burst error is the same as the bit length of the CRC.

Furthermore, if a malfunction has been detected in one or more of the transmission lanes, the serial interface port 30 selects transmission lanes of which the quantity is calculated by adding 1 to a half of the total quantity of transmission lanes, from among such transmission lanes in which no malfunction was detected. For example, the serial interface port 30 selects five transmission lanes out of the eight transmission lanes. With this arrangement, the serial interface port 30 is able to improve the burst error tolerance, without increasing the bandwidth used in the degenerate mode.

Furthermore, if malfunctions have been detected in a half of the total quantity (i.e., eight) of transmission lanes, the serial interface port 30 instructs the link-down operation and notifies the application executed by the CPU 10 of the link-down state. In other words, the serial interface port 30 notifies the user that the data transmission is not possible. With this arrangement, if it is no longer possible to guarantee the reliability as a result of the detection of the malfunctions, the serial interface port 30 is able to suspend the data transmission.

Further, in the degenerate mode, the serial interface port 30 divides the normal-time transmission data into the two sections and transmits the data in the two separate cycles. More specifically, the serial interface port 30 transmits the former half of the normal-time transmission data in the even cycle and transmits the latter half of the normal-time transmission data in the odd cycle.

Both in the even cycle and the odd cycle, the serial interface port 30 transmits the CRC in the same transmission/reception cycle, the CRC being capable of detecting errors in the transmitted data. With this arrangement, the serial interface port 30 is able to keep the bandwidth used in the degenerate mode half as large as the bandwidth used during normal times.

Furthermore, the serial interface port 30 selects the transmission lanes to be used in the degenerate mode, on the basis of the logic prioritizing the use of the transmission lanes that are used in common when the lane reversal is applied. With this arrangement, the serial interface port 30 makes it unnecessary to arrange complicated installations accommodating the application of the lane reversal.

Further, the serial interface port 30 gives the transmission lanes the physical lane addresses as well as the pseudo physical lane addresses of which the sequence is in the reverse order of the sequence of the physical lane addresses. When the lane reversal is applied, the serial interface port 30 selects the transmission lanes to be used according to the pseudo physical lane addresses. With this arrangement, the serial interface port is able to easily implement the lane reversal function.

### [b] Second Embodiment

The first embodiment of the serial interface port 30 has thus been explained. However, the present disclosure can be embodied in various modes other than the exemplary embodiments described above. In the following sections, some other embodiments included in the present disclosure will be explained as a second embodiment.

### (1) Regarding applicable data transmissions

The serial interface port 30 described above is configured to transmit the data that is transmitted and received between the CPU 10 and the CPU 11; however, the exemplary embodiments are not limited to this example. For instance, the data transfer method realized by the serial interface port 30 may be applied to a data transfer between a CPU and an Input/Output (I/O) apparatus such as a Hard Disk Drive (HDD).

In other words, the data transfer method described above is applicable to data communications between other various arbitrary apparatuses. Because the data transfer method described above is able to improve the burst error tolerance in data transfer processes, the data transfer method is applicable to environments where reliability is in demand, such as system buses in servers, and the like.

### (2) Regarding the transmission lanes

The serial interface port 30 described above is configured to transmit the data via the eight transmission lanes; however, the exemplary embodiments are not limited to this example. It is acceptable to transmit the data via an arbitrary quantity of transmission lanes. For example, it is acceptable to configure the serial interface port 30 to transmit the data via sixteen transmission lanes. In that situation, it is acceptable to configure the serial interface port 30 so as to, in the degenerate mode, transmit data via eight transmission lanes and to transmit a CRC via one transmission lane.

Further, the quantity of transmission lanes used in the degenerate mode is not limited to half as many transmission lanes as during normal times. In other words, it is acceptable to configure the serial interface port 30 so as to use sixteen transmission lanes during normal times and so as to reduce the quantity of transmission lanes to be used to twelve, to eight, and to four, as the quantity of transmission lanes in which a malfunction is detected increases.

### (3) Regarding the transmission lanes to be used in the degenerate mode

The serial interface port 30 described above is configured to select the transmission lanes to be used in the degenerate mode, by using the logic illustrated in FIG. 10. However, the exemplary embodiments are not limited to this example. It is acceptable to select the transmission lanes to be used, by using other arbitrary logic. Furthermore, the serial interface port 30 does not necessarily have to ensure that, in the degenerate mode, the physical lane numbers of the transmission lanes to be used match the physical lane numbers of the reception lanes to be used.

According to an embodiment, it is possible to improve the tolerance for the burst errors occurring while the multi-link method is being used.

## Claims

1. A data transfer apparatus (30) comprising:
a plurality of transmitting units (37 to 39) that transmit data in a same time period via different transfer paths;
a detecting unit (41) that detects a malfunction in any of the transfer paths;
a selecting unit (42) that, when no malfunction is detected by the detecting unit (41), selects all of the transmitting units (37 to 39) and that, when one or more malfunctions have been detected by the detecting unit (41), selects a predetermined number of transmitting units (37 to 39) from among such transmitting units (37 to 39) that transmit data via transfer paths in which no malfunction is detected by the detecting unit (41);
a generating unit (34) that generates redundancy data used for detecting errors, by using data to be transmitted during a predetermined time period by transmitting units (37 to 39) remaining after excluding one transmitting unit from the transmitting units (37 to 39) selected by the selecting unit (42); and
an assigning unit (42) that assigns the data to transmitting units (37 to 39) remaining after excluding one transmitting unit from the transmitting units (37 to 39) selected by the selecting unit (42) and assigns the redundancy data generated by the generating unit (34) to the excluded transmitting unit.

2. The data transfer apparatus (30) according to claim 1, wherein the generating unit (34) generates the redundancy data, to be transmitted by the excluded transmitting unit within a predetermined time period, having a bit length equal to a bit length of the data transmitted by each of the transmitting units (37 to 39) within the predetermined time period.

3. The data transfer apparatus (30) according to claim 1 or 2, wherein, when one or more malfunctions have been detected by the detecting unit (41), the selecting unit (42) selects transmitting units (37 to 39) of which the number is calculated by adding 1 to a half of a total number of transmitting units (37 to 39), from among such transmitting units (37 to 39) that transmit data via the transfer paths in which no malfunction is detected by the detecting unit (41).

4. The data transfer apparatus (30) according to claim 3 further comprising: a notifying unit that, when the detecting unit (41) has detected one or more malfunctions in a predetermined number of transfer paths among the transfer paths, notifies a user that the transmission of the data is not possible.

5. The data transfer apparatus (30) according to claim 3 or 4, wherein, when one or more malfunctions have been detected by the detecting unit (41), the assigning unit (42) divides the data into two sections and assigns a former half of the data to transmitting units (37 to 39) remaining after excluding one from the transmitting units (37 to 39) selected by the selecting unit (42) and subsequently assigns a latter half of the data to transmitting units (37 to 39) remaining after excluding one from the transmitting units (37 to 39) selected by the selecting unit (42).

6. The data transfer apparatus (30) according to any one of claims 1 to 5, wherein
serial lane numbers are given to the plurality of transmitting units (37 to 39), and
when one or more malfunctions have been detected by the detecting unit (41), the selecting unit (42) selects the predetermined number of transmitting units (37 to 39) from among such transmitting units (37 to 39) that transmit data via the transfer paths in which no malfunction is detected by the detecting unit (41), with prioritizing such transmitting units (37 to 39) that are used in common when a lane reversal is applied.

7. The data transfer apparatus (30) according to claim 6, wherein
pseudo lane numbers obtained by applying a lane reversal conversion to the lane numbers are given to the plurality of transmitting units (37 to 39), and
the assigning unit (42) assigns the data on a basis of the lane numbers when the lane reversal is not applied, whereas the assigning unit (42) assigns the data on a basis of the pseudo lane numbers when the lane reversal is applied.

8. A data transfer method comprising:
detecting a malfunction in any of transfer paths
selecting all of the transfer paths when no malfunction is detected at the detecting in the transfer paths and selecting a predetermined number of transfer paths from among such transfer paths in which no malfunction is detected when one or more malfunctions have been detected at the detecting;
generating redundancy data used for detecting errors, by using data transmitted during a predetermined time period via transfer paths remaining after excluding one from the selected transfer paths at the selecting; and
transmitting the data via transfer paths remaining after excluding one transfer path from the selected transfer paths at the selecting and transmitting, during the same time period, the generated redundancy data at the generating via the excluded transfer path.
